# EUROPEAN PATENT SPECIFICATION

(11) **EP 4 407 471 B1**
(45) Date of publication and mention of the grant of the patent: **17.09.2025**
(21) Application number: 24153943.6
(22) Date of filing: 25.01.2024
(51) Int. Cl.: G06F 12/0811, G06F 12/0868, G06F 12/0871, G06F 12/0888, G06F 12/0897

(54) **MULTI-MODE TIERED MEMORY CACHE CONTROLLER**
MEHRSTUFIGE SPEICHERCACHESTEUERUNG MIT MEHREREN BETRIEBSARTEN
CONTRÔLEUR DE CACHE DE MÉMOIRE MULTINIVEAU MULTIMODE

(30) Priority: 26.01.2023 US 202318160172
(43) Date of publication of application: 31.07.2024
(73) Proprietor: VMware LLC, Palo Alto, CA 94304 (US)
(72) Inventor: Nowatzyk, Andreas Georg, Palo Alto, 94304 (US); Subrahmanyam, Pratap, Palo Alto, 94304 (US); Akkawi, Isam Wadih, Palo Alto, 94304 (US); Nayak, Adarsh Seethanadi, Troy, 12182 (US); Dua, Nishchay, Palo Alto, 94304 (US)
(74) Representative: Dilg, Haeusler, Schindelmann Patentanwaltsgesellschaft mbH

(56) References cited:
- US-A1- 2011 087 895
- US-A1- 2019 220 406
- US-A1- 2019 370 177
- US-A1- 2021 064 531
- US-B1- 10 049 046

## Description

### Technical Field

The present disclosure generally relates to the technical field of memory controllers for a computer system.

In particular, the present disclosure relates to (i) a method performed by a hardware-based tiered memory cache controller of a tiered memory computer system, (ii) a hardware-based tiered memory cache controller of a tiered memory computer system, and (iii) a tiered memory computer system.

### Background

US20210064531A1 describes software-defined coherent caching of pooled memory in an environment with a disaggregated architecture by using software-defined caching policies in hardware for effecting caching in an associated disaggregated memory cache of address space allocated for the software application in the disaggregated memory.

US20190220406A1 describes integrating a memory and storage hierarchy including a non-volatile memory tier within a computer system. Phase Change Memory and Switch memory devices are used as far memory and higher performance memory devices such as dynamic random-access memory placed in front of the far memory as near memory and are used to mask some of the performance limitations of the far memory.

US20110087895A1 describes cryptographic instructions and non-cryptographic instructions for a cryptographic execution pipeline with a corresponding cryptographic execution latency, and a non-cryptographic execution pipeline with a corresponding non-cryptographic execution latency that is longer than the cryptographic execution latency.

Unless otherwise indicated, the subject matter described in this section is not prior art to the claims of the present application and is not admitted as being prior art by inclusion in this section.

The cost of main memory (typically dynamic random-access memory (DRAM)) for servers in a data center is often a significant component of the data center's total cost of ownership (TCO). Thus, in many cases a tiered memory model is used for such servers that involves substituting portions of main memory with cheaper but less performant memory technologies like non-volatile memory (also known as persistent memory) and block-oriented flash memory (e.g., solid-state disks (SSDs)). This allows for a reduction in TCO without reducing the total amount of physical memory available to each server.

Because the tiered memory model means that a server's physical memory address space is mapped to several different types (i.e., tiers) of memory with different cost and performance characteristics, adoption of this model makes memory allocation more challenging. For example, to minimize costs it is desirable to place as much data as possible in the cheapest (i.e., lowest) memory tiers, but this will result in decreased performance in scenarios where frequently accessed data is kept in a less performant memory tier.

### Summary

The invention is defined in the appended claims. The dependent claims set out particular embodiments.

### Brief Description of the Drawings

FIG. 1 depicts an example tiered memory computer system.
FIG. 2 depicts an enhanced version of the tiered memory computer system of FIG. 1 that includes a tiered memory cache controller according to certain embodiments.
FIG. 3 depicts a workflow for implementing multi-mode behavior in a tiered memory cache controller according to certain embodiments.
FIG. 4 depicts a hardware design for a tiered memory cache controller according to certain embodiments.
FIG. 5 depicts another hardware design for a tiered memory cache controller according to certain embodiments.
FIG. 6 depicts a portion of hardware logic for a fully associative lookup and address map component according to certain embodiments.
FIG. 7 depicts a workflow that may be performed by a fully associative lookup and address map component according to certain embodiments.
FIG. 8 depicts a hardware design for a hash function according to certain embodiments.
FIG. 9 depicts a hardware design for a transfer transaction dictionary component according to certain embodiments.

### Detailed Description

In the following description, for purposes of explanation, numerous examples and details are set forth in order to provide an understanding of various embodiments. It will be evident, however, to one skilled in the art that certain embodiments can be practiced without some of these details or can be practiced with modifications or equivalents thereof.

### 1. Example Tiered Memory Computer System and Solution Overview

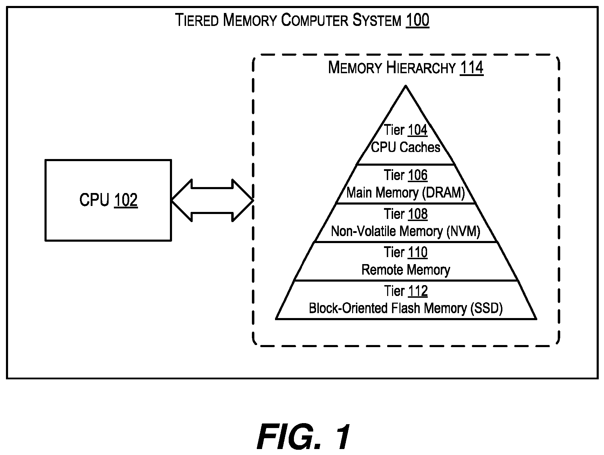

Embodiments of the present disclosure pertain generally to hardware-based caching, and more specifically to a hardware-based cache controller for a tiered memory computer system, referred to as a tiered memory cache controller (TMCC). FIG. 1 is a simplified block diagram of an example tiered memory computer system 100 in which this TMCC may be implemented. System 100 may be, e.g., a server in a data center or any other type of computer system that uses a tiered memory model.

As shown, system 100 includes a central processing unit (CPU) (also known as a processing core) 102 that is communicatively coupled with a number of different types (i.e., tiers) of physical memory 104-112. Although only a single CPU is depicted for purposes of illustration, one of ordinary skill in the art will appreciate that system 100 will typically include several CPUs. Each CPU resides on a processor package (i.e., chip) that is inserted into a corresponding socket on the mainboard of system 100.

Memory tiers 104-112 are logically organized in the form of a memory hierarchy 114 where higher tiers in the hierarchy comprise faster but more costly, and thus typically scarcer, memory and lower tiers in the hierarchy comprise slower but less expensive, and thus typically more abundant, memory. For example, in FIG. 1 the highest memory tier 104 of hierarchy 114 comprises CPU caches (e.g., L1, L2, and L3 caches) that reside on the same processor package as CPU 102. The next highest memory tier 106 comprises local main memory (e.g., DRAM) that is directly attached to CPU 102's socket via a dedicated memory bus or indirectly attached to CPU 102's socket via a connection to another socket of the system. The last three memory tiers 108, 110, and 112 comprise non-volatile memory (NVM), remote memory (which is memory that is located on one or more remote computer systems), and block-oriented flash memory (e.g., SSD) respectively. Each of these lower memory tiers are progressively slower but more cost-effective than main memory tier 106 and are connected to CPU 102/tier 106 (collectively referred to as a CPU/main-memory complex) via a cache-coherent interface such as Compute Express Link (CXL), HyperTransport, QuickPath Interconnect (QPI), or the like.

As noted in the Background section, in a tiered memory computer system like system 100, the task of memory allocation-which is typically performed by system software (i.e., operating system (OS) or hypervisor) and involves placing data in a particular memory tier-is difficult due to the need to balance cost and performance considerations. For example, it is generally desirable to place as much data as possible in the lower memory tiers, thereby reducing the amount of provisioned capacity needed in the higher memory tiers. However, if a memory object that is frequently accessed by an application is placed and kept in a lower memory tier, the performance of the application will be degraded. There are existing, relatively complex algorithms that enable an OS/hypervisor to track statistics regarding frequently accessed memory objects and make informed memory allocation decisions based on those statistics; however, despite their complexity, these existing algorithms are not foolproof and will occasionally (or in some scenarios, frequently) produce sub-optimal results.

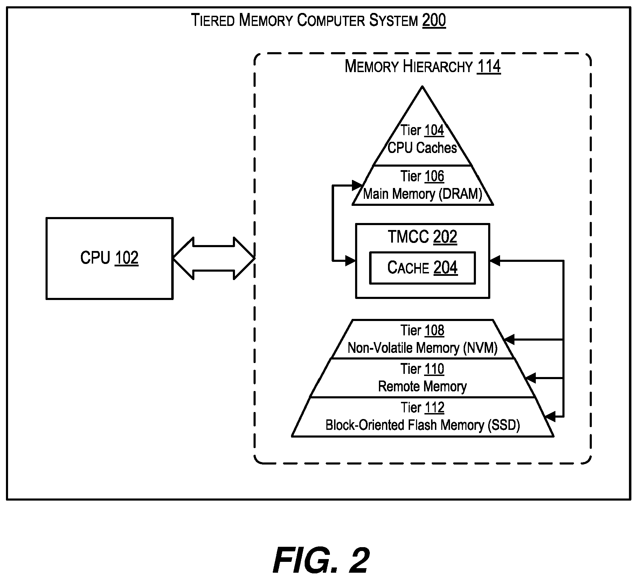

To address the foregoing issue and other needs/challenges arising out of the tiered memory model employed by system 100, FIG. 2 depicts an enhanced version of this system (shown via reference numeral 200) that includes a novel hardware-based tiered memory cache controller (TMCC) 202. In one set of embodiments, TMCC 202 may be implemented using a programmable logic circuit such as a field-programmable gate array (FPGA). In other embodiments, TMCC 202 may take the form of an application-specific integrated circuit (ASIC).

As shown in FIG. 2, TMCC 202 includes a cache 204 and resides between the system's main memory at tier 106 and lower memory tiers 108-112. For example, in the case where memory tiers 108-112 connect to the CPU/main-memory complex via a CXL interface, TMCC 202 can be connected to each of these components using that same CXL interface. It is assumed that TMCC 202 has visibility into the memory transactions passed between the CPU/main-memory complex and lower memory tiers 108-112 and can intercept, substitute, or copy those memory transactions into its cache 204. In addition, it is assumed that TMCC 202 can asynchronously initiate cache-coherent memory transactions to main memory tier 106 and can directly access data in lower memory tiers 108-112.

According to one set of embodiments (detailed in section (2) below), TMCC 202 can flexibly operate in a number of different modes that aid the OS/hypervisor of system 200 in managing and optimizing its use of main memory tier 106 and lower memory tiers 108-112. These operating modes can include, e.g., a mode for caching memory objects that are maintained in lower memory tiers 108-112 to increase performance, a mode for enabling the migration of memory objects between tiers 106-112, and a mode for collecting statistics useful for making memory allocation decisions. In this way, TMCC 202 can facilitate and/or accelerate many functions that are typically performed by a tiered memory computer system.

According to another set of embodiments (detailed in section (3) below), TMCC 202 can employ a unique hardware architecture that includes, among other things, a fully associative lookup and address map (LUAM) component that leverages 2-choice (or more) hashing and a transfer transaction dictionary (TTD) component. As explained in section (3), these components enable TMCC 202 to significantly reduce the probability of tag collisions, decouple cache capacity management from cache lookup and allocation (which has a number of important implications, particularly with respect to the operating modes that may be supported by the TMCC), and handle multiple concurrent cache transactions directed to the same memory address/object, without complicating the core design of cache 204.

It should be appreciated that FIGS. 1 and 2 are illustrative and not intended to limit embodiments of the present disclosure. For example, although these figures depict a particular arrangement of components within tiered memory computer system 100/200, other arrangements are possible (e.g., the functionality attributed to a particular component may be split into multiple components, components may be combined, etc.). In addition, some embodiments (like those directed to the internal architecture of TMCC 202/cache 204) are not limited to the context of a tiered memory computer system. Such embodiments may be implemented in any type of computer system that uses hardware-based caching. One of ordinary skill in the art will recognize other variations, modifications, and alternatives.

### 2. Multi-Mode Behavior of TMCC

Traditional hardware caches such as a CPU cache are designed to achieve a single objective-exploit spatial and/or temporal locality to access data from a small but fast cache memory, thereby speeding up memory operations directed to a larger but slower memory. In contrast, the applicants of the present disclosure have recognized that a hardware cache which operates in a tiered memory context needs to perform several different functions to achieve different goals, such as statistics gathering to inform promotion/demotion of memory objects up/down the memory hierarchy, data movement and/or substitution, and so on.

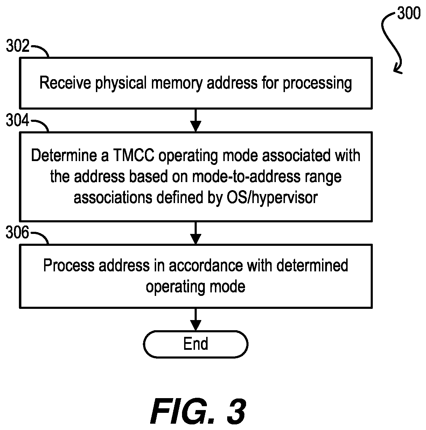

To address this need, in certain embodiments TMCC 202 of FIG. 2 can support multi-mode behavior, or in other words can support multiple operating modes that enable the TMCC to utilize its cache 204 in different ways that are relevant or helpful to the management/use of memory hierarchy 114 (and in particular, tiers 106-112 of the hierarchy). FIG. 3 depicts a high-level workflow 300 that may be executed by TMCC 202 for implementing this multi-mode behavior according to one set of embodiments. Workflow 300 assumes that the multi-mode behavior of TMCC 202 is controlled by the OS/hypervisor of system 200 because the OS/hypervisor will typically be the entity that manages memory hierarchy 114 and makes memory allocation decisions. Specifically, workflow 300 assumes that the OS/hypervisor has associated one or more of the TMCC's operating modes to specific ranges of the system's physical memory address space which map to lower memory tiers 108-112, based on the OS/hypervisor's intended use of TMCC 202 with respect to the data held in those address ranges. It is also possible for the OS/hypervisor to control the multi-mode behavior of TMCC 202 via other mechanisms in addition to, or in lieu of, this range association mechanism.

Starting with step 302 of workflow 300, TMCC 202 can receive from, CPU 102, a physical memory address for processing, where this physical memory address is part of a memory transaction (e.g., a read or write transaction) initiated by the CPU. This physical memory address will be in binary format (e.g., a bitstring of *k* bits) and will generally be the address of a memory object held in one of the lower memory tiers 108-112 below main memory tier 106.

At block 304, TMCC 202 can determine, from among the plurality of operating modes that it supports, an operating mode associated with the received address. This determination can be based on the mode-to-memory address range associations created by the OS/hypervisor. For example, if the OS/hypervisor associated an operating mode M1 to a range R1 on memory tier 108 and the address received at step 302 falls within R1, TMCC 202 can identify M1 as being the appropriate operating mode. As part of this step, TMCC 202 may also retrieve certain parameters for the determined operating mode from, e.g., a set of control registers updated by the OS/hypervisor.

Finally, at block 306, TMCC 202 can process the received physical memory address in accordance with the determined operating mode. For instance, the determined operating mode may affect what metadata TMCC 202 creates or updates for the address in cache 204 as well as the cache allocation, eviction, and/or capacity management policies that it applies at the time of processing the address.

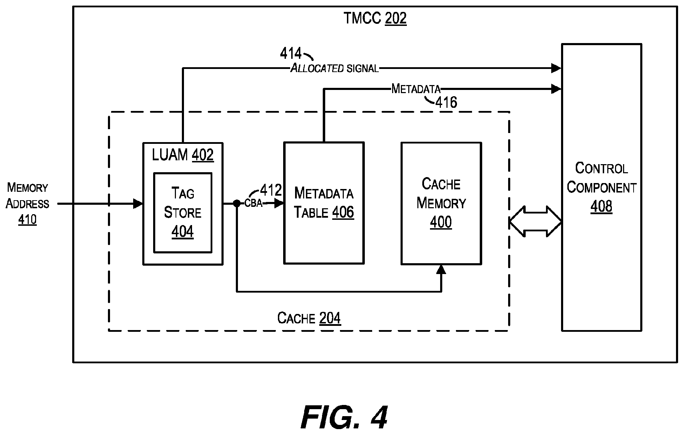

In some embodiments, TMCC 202 can achieve the multi-mode behavior described above using a common data path and a common set of functional components. FIG. 4 is a simplified block diagram illustrating this common data path and component set according to such embodiments. As shown in FIG. 4, cache 204 of TMCC 202 is composed of a cache memory 400, a lookup and address map (LUAM) 402 comprising a tag store 404, and a metadata table 406. In addition, TMCC 202 includes a control component 408 that is communicatively coupled with cache 204.

Cache memory 400 is a physical memory separate from memory hierarchy 114 that is organized as an array of cache blocks, indexed by cache block address (CBA). In certain operating modes of TMCC 202, each cache block may be divided into a number of sub-blocks and each sub-block may have a size that matches the smallest individually addressable/transferrable unit of memory of one or more memory tiers in hierarchy 114. For example, as noted below, some operating modes may use a sub-block size equal to a single cache line of the CPU caches in memory tier 104, while other operating modes may use a sub-block size equal to the smallest unit of transfer for a lower memory tier 108-112.

LUAM 402 receives as input a physical memory address 410 corresponding to a memory transaction initiated by CPU 102 and performs a lookup into its tag store 404 based on the address. The details of this lookup process are presented in section (3), but it generally involves attempting to match a "tag" of physical memory address 410 to a tag entry in tag store 404 that is keyed by an index derived from the address. If the lookup results in a match to particular tag entry, that means the data of physical memory address 410 is held in some allocated cache block in cache memory 400 (referred to as a cache hit). In this case, LUAM 402 outputs the CBA of that allocated cache block (reference numeral 412) and asserts (i.e., sets to 1) an *allocated* binary signal 414. CBA 412 can be subsequently used to perform another lookup into metadata table 406, thereby retrieving metadata associated with the allocated cache block, and/or perform another lookup into cache memory 400, thereby retrieving the data of the allocated cache block. If the lookup into tag store 404 does not result in a match to any tag entry, that means the data of physical memory address 410 is not in cache memory 400 (referred to as a cache miss). In this case, LUAM 402 simply de-asserts (i.e., sets to 0) *allocated* binary signal 414.

Metadata table 406 comprises a plurality of metadata entries, one per cache block of cache memory 400. Each metadata entry is indexed by the CBA of its corresponding cache block and includes metadata regarding the data in that cache block (if the cache block is allocated) which TMCC 202 can use as part of executing its various operating modes. For example, in one set of embodiments this metadata may include, among other things, a *present* bit that indicates whether the cache block contains valid data. If the cache block is divided into multiple sub-blocks, the metadata may include a *present* bit vector that comprises a separate *present* bit for each sub-block of the cache block.

It should be noted that while metadata table 406 is depicted as being separate from LUAM 402, this is not required in all embodiments of TMCC 202; in some embodiments, the metadata information held in table 406 may be maintained in the LUAM 402 as part of its tag store 404. However, the implementation of metadata table 406 as a standalone entity yields certain benefits that are explained in section (3) below.

Finally, control component 408 orchestrates the overall operation of TMCC 202 and cache 204, including receiving *allocated* signal 414 from LUAM 402, metadata 416 from metadata table 406, and executing the multi-mode behavior workflow 300 of FIG. 3. In some embodiments control component 408 may be implemented using a micro-programmable sequencer, which allows the various operating modes of TMCC 202 to be modified and/or optimized via firmware upgrades.

### 2.1 Example operating modes

With the foregoing high-level component description of TMCC 202 and its multi-mode behavior in mind, the following sub-sections detail a number of example operating modes that may be supported by TMCC 202 according to certain embodiments. It should be appreciated that this list of operating modes is not meant to be exhaustive and other operating modes are possible. Further, depending on the particular implementation, TMCC 202 may support some, all, or none of these specific operating modes.

Each operating mode below is characterized by the following aspects: "purpose," "operation," "cache block size," "sub-block size," "metadata," "allocation policy", "eviction policy," "capacity management," and "additional functionality." "Purpose" provides a brief description of the operating mode and explains its intended function and the context in which it operates.

"Operation" indicates whether the cache transactions executed in the operating mode may proceed sequentially or concurrently with their corresponding memory transactions. A "memory transaction" in this context is a memory read/or write operation initiated by CPU 102 that is directed to a physical memory address mapped to a lower memory tier 108-112. A "cache transaction" refers to the processing performed by TMCC 202 on a physical memory address received from CPU 102 as part of a given memory transaction. In conventional hardware caches, a cache transaction is always executed sequentially because this ensures that the target memory of the corresponding memory transaction does not receive it unless the physical memory address is not found in the cache. This avoids performing the memory transaction on a cache hit, which saves bandwidth. The downside to this sequential approach is that upon a cache miss, the total latency of the memory transaction is increased by the cache lookup time.

In the case of TMCC 202, the hit rate of its cache 204 is not particularly high because it is shielded to an extent by the CPU caches at memory tier 104. This means that sequential operation may not save a significant amount of bandwidth (due to fewer cache hits), while introducing a higher average memory latency (due to greater cache misses). Thus, it may be preferable to allow concurrent operation in certain modes.

"Cache block size" and "sub-block size" refer to the size of each cache block and sub-block (if applicable) in cache memory 400 for the operating mode.

"Metadata" summarizes the metadata maintained in metadata table 406 for the operating mode.

"Allocation policy" and "eviction policy" describe the algorithms employed in the operating mode for allocating new cache blocks and evicting allocated cache blocks respectively.

"Capacity management" describes the algorithm employed in the operating mode for managing free space in cache memory 400, and in particular when to evict allocated cache blocks. In conventional hardware caches, eviction of an allocated cache block is always (and only) performed upon cache miss, if the cache is full. However, certain operating modes of TMCC 202 (such as the attraction cache mode described in sub-section (2.1.4)) require a certain amount of free cache space to accept new cache transactions. Consequently, a capacity management algorithm may be used to keep track of this free space and ensure there is enough available cache capacity at all times to accept incoming transactions.

"Additional functionality" describes other features that may be provided by the operating mode.

### 2.1.1 Standard cache mode

**Purpose:** Standard cache mode is similar to the operation of a conventional hardware cache in that it caches, in cache memory 400, data held in lower memory tiers 108-112 to exploit spatial and/or temporal data locality and thereby improve the performance of memory transactions directed to those tiers.

**Operation:** Sequential.

**Cache Block Size:** One CPU cache line (e.g., 64 bytes).

**Sub-block Size:** No sub-blocking.

**Metadata:** One *present* (i.e., valid) bit. May also include information used for implementing LRU (least recently used) eviction, such as an access history, and a dirty (i.e., modified) bit used for avoiding unnecessary write-backs to memory upon eviction.

**Allocation Policy:** Always allocate upon cache miss.

**Eviction Policy:** LRU, may prefer to evict clean cache blocks if the dirty bit is used.

**Capacity Management:** None, implicit in the allocation and eviction policies.

**Additional Functionality:** None.

### 2.1.2 Cooking cache mode

**Purpose:** In cooking cache mode, CPU 102 stages (or in other words, "cooks"), in the TMCC's cache, memory pages that are candidates for demotion from main memory tier 106 to a lower memory tier 108-112 (referred to as the target memory tier) for a certain period of time. While a given memory page is staged/cooked in this manner, TMCC 202 keeps track of the number of accesses made to the page in order to determine whether the page is "cold" (i.e., infrequently accessed) or "hot" (i.e., frequently accessed). If the page is determined to be cold at the end of cooking period, TMCC 202 can automatically copy or migrate it to the target memory tier, without further intervention from the CPU.

**Operation:** Sequential.

**Cache Block Size:** One memory page (e.g., 4 kilobytes (KB) or 2 megabytes (MB)).

**Sub-block Size:** No sub-blocking.

**Metadata:** One *present* bit and an access counter for hot/cold determination. May also include a timestamp of last access and/or a dirty bit. In cases where the cooking period lasts for an extended period of time and the memory page is speculatively copied to the target memory tier in the background, the metadata may include dirty bits on a sub-block granularity so that a final copy at the end of the cooking period only needs to copy the modified sub-blocks. This may be useful if, e.g., the target memory tier comprises remote memory.

**Allocation Policy:** Controlled by OS/hypervisor. In particular, the OS/hypervisor explicitly allocates a cache block at the time of initiating the cooking of a memory page. This allocation involves transferring the memory page from main memory tier 106 to the TMCC's cache, changing the page's virtual-to-physical address mapping, and performing a translation lookaside buffer (TLB) flush to clear the stale mapping for that virtual address from CPU 102's TLB.

**Eviction Policy:** Controlled by OS/hypervisor or performed automatically after a certain time period has elapsed.

**Capacity Management:** Controlled by OS/hypervisor based on cache utilization information provided by TMCC 202.

**Additional Functionality:** As mentioned above, TMCC 202 can automatically transfer a cold memory page to its target memory tier at the end of the cooking period.

### 2.1.3 Promotion cache mode

**Purpose:** In promotion cache mode, CPU 102 stages, in the TMCC's cache, memory pages that have been selected for promotion from a lower memory tier 108-112 (referred to as the source memory tier) to main memory tier 106. This addresses the problem that a data transfer from a lower memory tier 108-112 to main memory tier 106 may take a significant amount of time, which requires the page to be protected from access for the entire duration of the transfer and increases the likelihood of a page fault.

More specifically, CPU 102 transfers a promoted memory page to cache 204 of TMCC 202 and, while this is occurring, TMCC 202 supports normal memory transactions against that page. Then, once the entirety of the memory page is in cache 204, the memory page is marked as protected and is transferred from the cache to main memory tier 106, thereby minimizing the duration of the "change-over" time (i.e., the time during which the page needs to be protected from access).

**Operation:** Sequential.

**Cache Block Size:** One memory page.

**Sub-block Size:** Unit of transfer from the source memory tier.

**Metadata:** One *present* bit for each unit of transfer. The transfer of data may happen out of order or in the background. Cache hits to non-present sub-blocks may be used to alter the transfer order and thereby minimize latency.

**Allocation Policy:** Controlled by OS/hypervisor.

**Eviction Policy:** Performed automatically upon completion of transfer or mediated by OS/hypervisor.

**Capacity Management:** Controlled by OS/hypervisor based on cache utilization information provided by TMCC 202.

**Additional Functionality:** May support batching of multiple transfers to amortize the TLB flush required when a transfer to main memory tier 106 is completed.

### 2.1.4 Attraction cache mode

**Purpose:** In attraction cache mode, data is "pulled" from a lower memory tier 108-112 (referred to as the source memory tier) to main memory tier 106 in response to CPU accesses. In particular, at the time CPU 102 accesses a portion of a memory page in the source memory tier, that portion (i.e., a sub-block) is placed in an allocated cache block of cache 204 and TMCC 202 begins fetching the rest of the memory page into the allocated cache block. Once the entirety of the memory page is in cache 204, TMCC 202 transfers it to main memory tier 106 and alerts the OS/hypervisor to remap the page from the physical address range of cache memory 400 to the physical address range of main memory tier 106. This mode is particularly useful for migrating data from remote memory to local main memory in scenarios where the order of the transfer should be controlled by the application using that data. For example, attraction cache mode can be leveraged to efficiently perform pull-based live migration of a virtual machine (VM).

**Operation:** Sequential.

**Cache Block Size:** One memory page.

**Sub-block Size:** Unit of transfer from the source memory tier.

**Metadata:** One *present* bit for each unit of transfer. The transfer of data may happen out of order or in the background. Cache hits to non-present sub-blocks may be used to alter the transfer order and thereby minimize latency.

**Allocation Policy:** Allocate on cache miss.

**Eviction Policy:** Performed automatically upon completion of transfer (e.g., all *present* bits are set). In some embodiments, eviction may be deferred to support batching and may include the transfer to main memory.

**Capacity Management:** Cache blocks are tracked using a free list (e.g., in the form of a ring buffer). Upon allocation, a cache block is removed from the free list and upon eviction, it is returned to the free list. With this approach, the number of used (i.e., allocated) cache blocks is known and can be used to flow control incoming cache transactions to ensure there is always a threshold number of free cache blocks. This is important because forced evictions from the cache (upon cache miss) may cause deadlocks to occur, due to certain properties of the cache-coherent interface that TMCC 202 uses to communicate with memory tiers 106-112.

**Additional Functionality:** May support batching of multiple transfers to amortize the TLB flush required when a transfer to main memory tier 106 is completed.

### 2.1.5 Difference cache mode

**Purpose:** Difference cache mode addresses a problem arising out of VM instant cloning and other similar mechanisms. With VM instant cloning, a first (i.e., parent) VM is used to create multiple clone VMs that share a common working set of memory pages in some memory. When one of the clone VMs attempts to write to a shared memory page, a copy-on-write (COW) policy is applied to create a private copy of that page for the VM, while the other clone VMs continue sharing the original page. This reduces the memory footprint of the clone VMs while allow each clone VM to modify the working set as needed.

The issue with the foregoing is that the COW policy replicates a new, private copy of a shared memory page upon any modification to that page, even if the modification is very small (e.g., a single byte). This is known as write amplification. To address this, difference cache mode enables TMCC 202 to cache changes made by a VM to a shared memory page while leaving the underlying page (as held in, e.g., one of the lower memory tiers 108-112) unchanged. When that VM subsequently attempts to read the changed data, the read transaction will be serviced by cache 204 of TMCC 202, rather than by the memory tier holding the shared memory page. At the same time, other VMs that also share the memory page will not see the changes in cache 204; they will only see the original unchanged data in the shared memory page. This advantageously avoids the write amplification problem because the shared memory page does not need to be replicated for every small modification. Instead, replication can be delayed until a certain number of changes to the memory page have been accumulated (or until a lack of free space in cache 204 forces an eviction).

**Operation:** Concurrent.

**Cache Block Size:** One or more CPU cache lines.

**Sub-block Size:** One CPU cache line.

**Metadata:** One *present* bit for each cache line.

**Allocation Policy:** Allocate on write.

**Eviction Policy:** Upon eviction, OS/hypervisor allocates a new memory page on the appropriate memory tier and performs a remap operation for the associated VM.

**Capacity Management:** Cache blocks are allocated from a dedicated pool; low capacity of that pool triggers eviction.

**Additional Functionality:** Function to signal OS/hypervisor upon eviction.

### 2.1.6 Store buffer/write coalescing cache mode

**Purpose:** Some memory technologies such as SSDs have significantly lower write performance than read performance and suffer from write endurance limitations. For lower memory tiers that are composed of such memories, it is desirable to minimize the total number of write transactions directed to those tiers. Accordingly, this mode provides two functions: a write coalescing function that aggregates multiple writes to a lower memory tier into a single write (by caching the write data and deferring the write-back operation), and a store buffer function that caches a write to a lower memory tier and services read transactions for that write data from the TMCC's cache until the write is successfully propagated to the lower storage tier.

**Operation:** Concurrent.

**Cache Block Size:** One memory page or an integral multiple of the unit of transaction for a block-oriented memory tier.

**Sub-block Size:** One CPU cache line.

**Metadata:** One *present* bit for each cache line.

**Allocation Policy:** Allocate on write.

**Eviction Policy:** Write-back triggered by need to free capacity and/or via expiration of a timer started upon allocation.

**Capacity Management:** LRU or LRU approximation.

**Additional Functionality:** Support for reading portions of a cache block that have not been written to.

### 3. TMCC Architecture

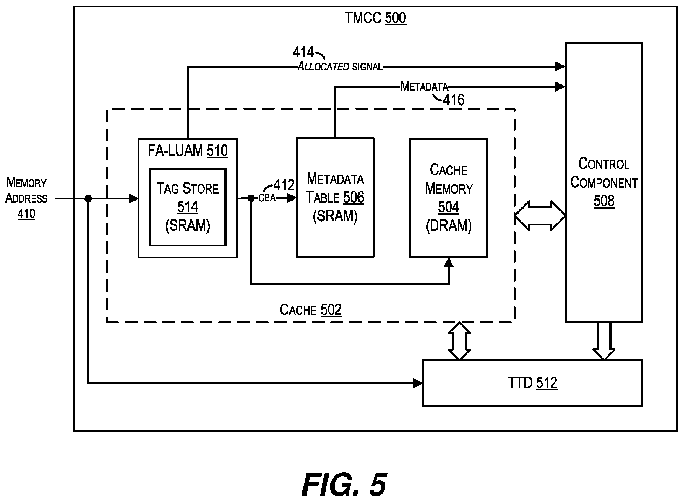

While FIG. 4 provides a high-level overview of the functional components of TMCC 202 and its cache 204, in certain embodiments a more specific TMCC architecture can be used that provides additional benefits, for example in terms of enabling some of the operating modes described above and allowing for an efficient hardware implementation. FIG. 5 is a simplified block diagram of a TMCC 500 and corresponding cache 502 that employs such an architecture according to one set of embodiments.

As depicted in FIG. 5, TMCC 500/cache 502 includes several components that are similar to those shown in FIG. 4, such as a cache memory 504, a metadata table 506, and a control component 508. However, in place of generic LUAM 402, cache 502 includes a new fully associative LUAM (FA-LUAM) component 510 that leverages multiple choice hashing as part of its lookup functionality. In addition, TMCC 500 includes a new transfer transaction dictionary (TTD) component 512 that is communicatively coupled with cache 502. The design and advantages of each of these new components are presented in the sub-sections below.

Further, cache memory 504 is specifically shown as being implemented using a DRAM of TMCC 500, and the tag store of FA-LUAM (reference numeral 514) and metadata table 506 are specifically shown as being implemented using a static random-access memory (SRAM) of TMCC 500. This is unlike conventional hardware caches, which typically implement cache memory using SRAM to maximize cache performance. The reason for this approach is that, in its various operating modes, the TMCC generally uses its cache memory as a dynamic alias for lower memory tiers 108-112. Given that these lower memory tiers are slower than the DRAM in main memory tier 106, there is no real benefit in implementing cache memory 504 using a memory type like SRAM that is faster (but also more expensive and power hungry) than DRAM. Accordingly, this approach does not reduce the performance of TMCC 500 while saving cost, power, and allowing for a higher cache capacity.

### 3.1 Fully associative lookup and address map (FA-LUAM)

To provide context for the design of FA-LUAM 510, the following sub-sections (3.1.1) and (3.1.2) provide overviews of two conventional LUAM designs: a direct mapped LUAM and an N-way associative LUAM (also known as a set associative LUAM).

### 3.1.1 Direct mapped LUAM

In a directed mapped LUAM, the tag store has the same size as the cache memory (with one-to-one mappings between tag entries and cache blocks) and, at the time of receiving a physical memory address, a portion of the address (typically the least significant bits) is used to determine an index that identifies a single tag entry and its corresponding cache block. The index is then used to look up that single tag entry and the tag field of the tag entry is compared with a tag that is determined from another portion (typically the most significant bits) of the address. If the tag field matches the tag, this is considered a cache hit and the index (which is effectively a CBA) is used to retrieve the cache block holding the data for the physical memory address from the cache memory. If the tag field does not match the tag, this is considered a cache miss.

The main advantage of this LUAM approach is that it is fast and simple to implement. However, because each physical memory address is statically mapped to a single tag entry/cache block and because several addresses will resolve to the same tag entry/cache block, there is a high likelihood of tag/cache collisions. When such a collision happens, the existing data stored in the cache block must be evicted to make room for the new incoming data, assuming an allocate on miss policy.

### 3.1.2 N-way associative LUAM

Like the direct mapped approach, in an N-way associative LAUM the tag store has the same size as the cache memory (with one-to-one mappings between tag entries and cache blocks) and, at the time of receiving a physical memory address, a portion of the address (typically the least significant bits) is used to determine an index into both the tag store and cache memory. However, this index does not identify a single tag entry/cache block; instead it identifies a group (also known as an associativity group or set) of *N* tag entries/cache blocks. For example, if there are *M* total tag entries/cache blocks, there will be *G = M*/*N* groups in the tag store and cache memory respectively, each with *N* tag entries/cache blocks. For the purposes of this disclosure, it is assumed that *N* is less than *M*.

The group index is used to look up the appropriate group of *N* of tag entries in the tag store and the tag fields of these tag entries are compared in parallel with the tag of the physical memory address. If any of the *N* tag fields match the tag, this is considered a cache hit and the group index (along with an offset identifying the matched group member) is used to retrieve the cache block holding the data for the physical memory address from the cache memory. If none of the *N* tag fields match the tag, this is considered a cache miss. In the cache miss scenario, if all the cache blocks corresponding to the *N* tag fields are already allocated (i.e., populated with some existing data), then this is a collision that requires the data from one of those cache blocks to be evicted, assuming an allocate on miss policy.

The advantage of this approach over the direct mapped approach is that the probability of collisions is reduced due to providing *N* possible tag entries/cache blocks for each physical memory address. However, in most practical implementations the associativity number *N* will be fairly low (e.g., 2, 4, or 8) and thus collisions will still occur fairly often, resulting in forced evictions.

### 3.1.3 Properties and advantages of FA-LUAM

The approach employed by FA-LUAM 510 of TMCC 500 is similar in some respects to an *N*-way associative LUAM but has a number of key distinctive properties, including the following:
1. The FA-LUAM's tag store 514 is divided into S sets, where each set is further divided into *N* associativity groups. Each of these sets is associated with a different hash function.
2. Upon receiving a physical memory address, FA-LUAM 510 hashes the address using the hash function of each set, resulting in S address hashes (one per set). FA-LUAM 510 then uses these address hashes to determine group indexes into their respective sets and processes each group index in accordance with the *N* -way associative approach with respect to its set (i.e., FA-LUAM 510 uses the group index to look up a group of *N* tag entries in the set and compare the tag fields of the *N* tag entries with a tag derived from a portion of the set's address hash). If any match is found across these *S* groups, it is considered a cache hit. Conversely, if no match is found across the *S* groups, it is considered a cache miss. In the case of allocating a tag entry to the physical memory address upon, e.g., a cache miss, FA-LUAM 510 selects a free tag entry from a group in the S groups that has the greatest number of free tag entries (or selects a free tag entry from a deterministically chosen group if there is a tie). Accordingly, this approach can be understood as leveraging multiple choice hashing where the number of choices is equal to S.
3. The total number of tag entries in tag store 514 is decoupled from the number of cache blocks in cache memory 504, and in particular the total number of tag entries is greater than the number of cache blocks. For example, if there are *N* tag entries per group, *G* groups per set, and *S* sets such that the total number of tag entries is *M = N · G · S*, the total number of cache blocks will be some number *C* < *M.* This is different from both the direct mapped and *N* -way associative approaches where there is a one-to-one mapping between tag entries and cache blocks. In a particular embodiment of FA-LUAM 510, there may be approximately twice as many tag entries in tag store 514 as there are cache blocks in cache memory 504.
4. Each tag entry of tag store 510 includes a new CBA field that holds the CBA of the cache block corresponding to that tag entry. This means that FA-LUAM 510 can assign any free cache block to a given tag entry at the time of allocation, which in turn makes FA-LUAM 510 fully associative (because the data for a physical memory address is not limited to being placed in a particular associativity group of *N < M* cache blocks). Stated another way, by introducing this CBA field to tag store 510, the CBA holding the data for a physical memory address is no longer tied to some portion of bits of the address itself; instead, the CBA can be completely independent of the address.

The foregoing properties of FA-LUAM 510 provide a number of important advantages. First, by using multiple choice hashing and ensuring that the total number of tag entries exceeds the number of cache blocks, the likelihood of tag collisions in tag store 514 is dramatically reduced. In fact, empirical results have shown that if there are twice as many tag entries as cache blocks, the likelihood of tag collisions with this approach is effectively zero. In a particular embodiment, FA-LUAM 510 can implement 2-choice hashing such that there are *N* tag entries per group, *G* groups per set, and 2 sets for 2 *· N · G* total tag entries and cache memory 504 can comprise *N · G* cache blocks.

Second, by storing CBAs in the tag entries of tag store 514 and thereby rendering those CBAs independent of the physical memory addresses they are mapped to, FA-LUAM 510 enables TMCC 500 to decouple capacity management for cache memory 504 from the cache's lookup and allocation mechanisms. For example, in certain embodiments TMCC 500 can maintain a list of free cache blocks in cache memory 504, track the cache's utilization, and evict data as needed to keep that utilization below a desired threshold, all independently from the operation of FA-LUAM 510. This, in combination with the virtual elimination of tag collisions via multiple choice hashing, means that TMCC 500 can completely avoid forced evictions, which in turn allows for the implementation of operating modes that rely on this property (like the attraction cache mode described previously). Independent cache capacity management also enables other useful features such as the partitioning cache memory 504 into regions that are dedicated for use by certain cache consumers (e.g., VMs, applications, etc.).

One consequence of having more tag entries than cache blocks is that the metadata for each cache block should be maintained separately from the tag store, which is the arrangement shown in TMCC 500 of FIG. 5 (as well as in TMCC 202 of FIG. 3). This is because there is a one-to-one correspondence between metadata entries and cache blocks, and thus adding metadata fields to the tag entries in tag store 514 would significantly increase the amount of SRAM, and therefore cost, needed to implement the tag store. At the same time, many of those tag entries would go unused. By keeping the metadata in separate metadata table 506, table 506 can be sized to exactly match the number of cache blocks in cache memory 504, thereby reducing the total amount of SRAM needed.

A downside of this approach is that TMCC 500 must perform an additional lookup into metadata table 506 (after the initial lookup into FA-LUAM 510) in order to retrieve the metadata for a cache block upon cache hit. However, this additional lookup should not noticeably impact the performance of TMCC 500 because it can be performed in parallel with the lookup into cache memory 504, which will take significantly longer to complete due to the use of DRAM for cache memory 504.

### 3.1.4 FA-LUAM hardware logic and workflow

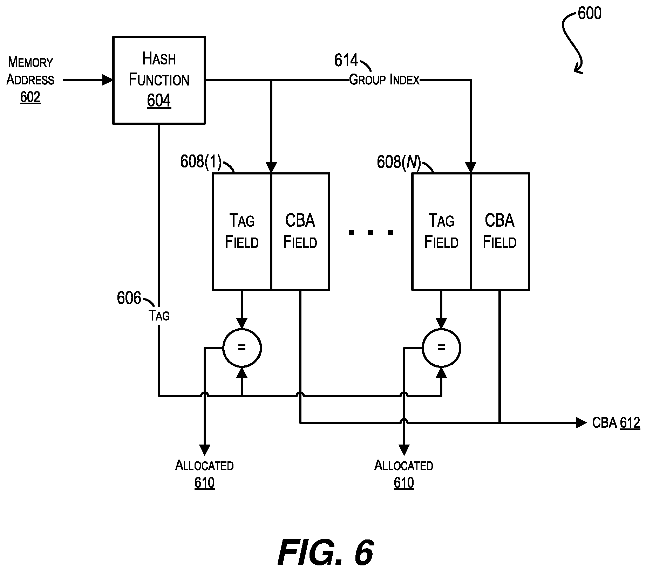

FIG. 6 is a simplified diagram that illustrates a portion 600 of the hardware logic for FA-LUAM 510 according to certain embodiments. In particular, FIG. 6 depicts one of the S sets in tag store 514 and the logic for (a) hashing an incoming physical memory address 602 using a hash function 604, (b) comparing, in parallel, a portion (i.e., tag 606) of the address hash with the tag field in each of a group of *N* tag entries 608(1)-(*N*), and (*c*) outputting an appropriate *allocated* signal 610 and a CBA 612 from the CBA field of the matched tag entry (in the case of a cache hit). Tag entries 608(1)-(*N*) correspond to a particular group in the set that is indexed by a group index 614 derived from the address hash.

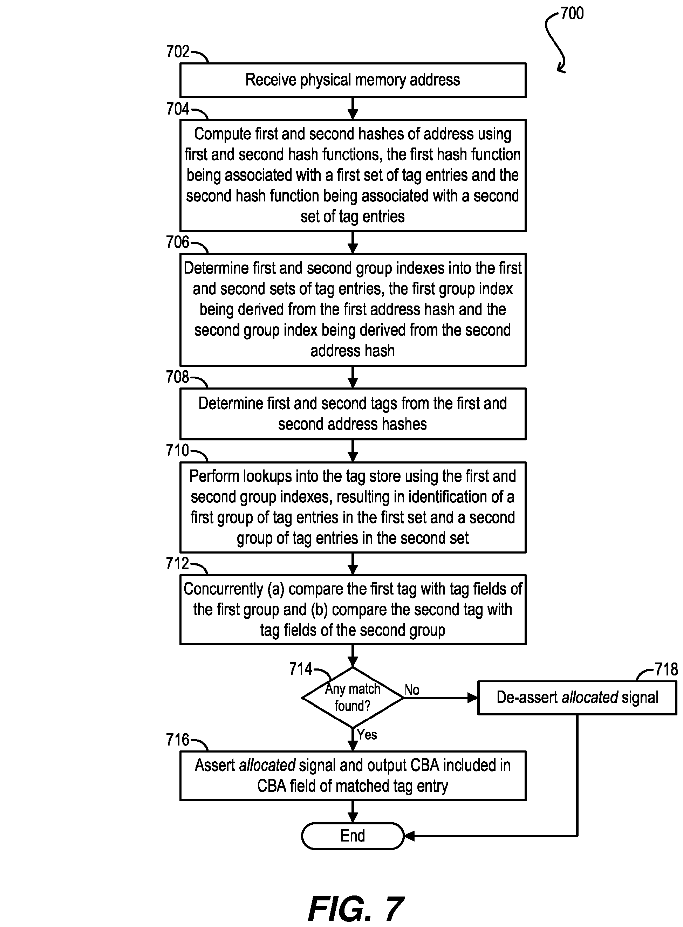

Further, FIG. 7 depicts a workflow 700 that outlines the steps performed by FA-LUAM 510 for processing an incoming physical memory address according to certain embodiments. For simplicity, workflow 700 assumes that FA-LUAM 510 uses 2-choice hashing and thus tag store 514 is divided into two sets. One of ordinary skill in the art will readily recognize the modifications that may be made to workflow 700 to accommodate more choices.

Starting with steps 702 and 704, FA-LUAM 510 can receive the physical memory address and can compute first and second hashes of the address using first and second hash functions respectively, where the first hash function is associated with the first set of tag entries in tag store 514 and the second hash function is associated with the second set of tag entries in tag store 514. Ideally, these two hash functions should be uncorrelated. Sub-section (3.1.5) below discusses other desirable properties and potential implementations of these hash functions.

At step 706, FA-LUAM 510 can determine first and second group indexes into the first and second sets of tag entries, where the first group index is derived from the first address hash and the second group index is derived from the second address hash. For example, the first and second group indexes can correspond to some subset of bits of the first and second hashes respectively. In addition, FA-LUAM can determine first and second tags from the first and second address hashes (step 708). For example, the first and second tags can correspond to the remaining bits in the first and second hashes that are not used for the first and second group indexes.

At step 710, FA-LUAM 510 can perform a lookup into tag store 514 using the first and second group indexes, resulting in the identification of a first group of tag entries in the first set and a second group of tag entries in the second set. FA-LUAM 510 can then concurrently (a) compare the first tag with the tag fields of the first group of tag entries and (b) compare the second tag with the tag fields of the second group of tag entries (step 712).

At step 714, FA-LUAM 510 can determine whether any match was made as a result of the comparisons at step 712. If the answer is yes, FA-LUAM 510 can assert its *allocated* binary signal and output the CBA included in the CBA field of the matched tag entry (step 716). If the answer is no, FA-LUAM 510 can de-assert the *allocated* signal (step 718). After either step 716 or 718, the workflow can end.

Although not shown, in the case where TMCC 500 is operating in a mode with an allocate on miss policy, once FA-LUAM 510 de-asserts the *allocated* signal (which indicates a cache miss), TMCC 500 can allocate a free cache block for the physical memory address and determine whether the first group of tag entries or the second group of tag entries includes a greater number of free tag entries. If the former is true, TMCC 500 can choose to map the address to the first group by selecting a free tag entry from the first group, storing the first tag in the tag field of that tag entry, and storing the CBA of the allocated cache block in the CBA field of that tag entry. If the latter is true, TMCC 500 can choose to map the address to the second group by selecting a free tag entry from the second group, storing the second tag in the tag field of that tag entry, and storing the CBA of the allocated cache block in the CBA field of that tag entry. If neither is true (i.e., the first and second groups have the same number of free tag entries), TMCC 500 can deterministically choose one of the two groups based on a predetermined policy (e.g., always choose the first group).

### 3.1.5 Hash function implementation

As mentioned previously, FA-LUAM 510 uses one hash function per set of tag entries in tag store 510 for hashing the incoming physical memory address. It is desirable for these hash functions to be independent so that there is no correlation between their hash outputs. Further, in certain embodiments it is desirable for each hash function to be information preserving, which means that if the hash function takes as input a *k*-bit address, it outputs a *k*-bit hash value that is uniquely mapped to the input address. This information preserving property is desirable because it allows FA-LUAM 510 to derive the address's tag, which must be unique to the address, from some subset of bits of the *k*-bit address hash (e.g., *k* - *n* bits, where *n* bits are used to generate the group index), rather than from the entirety of the original address itself. This in turn saves space in tag store 514.

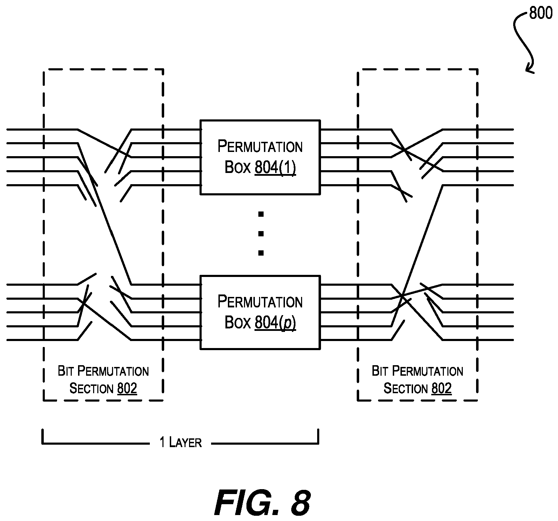

FIG. 8 is a simplified diagram illustrating the hardware design of an example hash function 800 usable by FA-LUAM 510 that is information preserving and can be efficiently implemented in an FPGA. As shown, hash function 800 is composed of multiple layers, each layer consisting of a bit permutation section 802 and a set of permutation boxes 804(1)-(*p*). Bit permutation section 802 receives the bits of a physical memory address (either from the input of the hash function or from a previous layer) via a set of input wires and statically scrambles those address bits before passing them on to permutation boxes 804(1)-(*p*) via a set of output wires connected to the input wires.

Each permutation box 804 takes as input a set of 5 or 6 bits from bit permutation section 802 and performs a further scrambling of those 5 or 6 bits in a fixed manner, resulting in a unique 5-bit or 6-bit output. The outputs of permutation boxes 804(1)-(*p*) are then passed on to the input wires of the bit permutation section of the next layer and this process is repeated for all subsequent layers. At the last layer, the outputs of permutation boxes 804(1)-(*p*) are output by hash function 800 as the hash value for the original input address.

In one set of embodiments, the bit permutation section of each layer can be created by employing a pseudo-random number (PRN) generator to select two input-to-output wires of the section, swapping their connections, and repeating these steps. Upon repeating this process thousands of times, a random permutation of the original input bits can be produced. In some embodiments, this process can alternate between odd and even permutations for successive layers.

Similarly, each permutation box can be created by using a PRN generator to select two input-to-output pairs of the box, swapping their outputs, and repeating this thousands of times. The reason each permutation box takes a 5 or 6-bit input and generates a 5 or 6-bit output is that a basic logic building block of existing FPGAs is a 5 or 6-bit (depending on the FPGA vendor) lookup table. Accordingly, with the architecture shown in FIG. 8, each layer of hash function 800 can be efficiently implemented using exactly one logic level (i.e., gate delay). In cases where the number of address bits is not a multiple of 5 or 6, a mixture of 4 and 5-bit permutation boxes may be used.

Given a sufficient number of layers, it is possible for all of the output bits of hash function 800 to be uncorrelated, such that the output could be considered to consist of *k* independent hash functions which each produce one bit. This means that in some embodiments FA-LUAM 510 may implement a single instance of hash function 800 for all of its *S* sets, rather than a separate hash function per set. In these embodiments, FA-LUAM 510 can simply use a different subset of bits of the output of hash function 800 to determine the group index for each set.

### 3.2 Transfer transaction dictionary (TTD)

In certain operating modes like the attraction cache mode, TMCC 500 can work on multiple cache transactions concurrently. Accordingly, TMCC 500 should be able to deal with conflicts arising out of such functionality, and in particular those arising out of concurrent cache transactions pertaining to the same physical memory addresses and/or memory objects.

One approach for handling these conflicts is to maintain transaction state in metadata table 506 that allows TMCC 500 to correctly manage them. However, depending on the nature of the concurrent transactions, this approach can potentially require a large amount of state per metadata entry that is only needed for a short period of time. This undesirably inflates the size of metadata table 506 and the amount of bandwidth needed for that table.

Another approach, which is realized by TTD 512, involves implementing an admission filter that delays (i.e., queues) transactions directed to the same address in order to bypass any conflicts. More specifically, TTD 512 performs two functions: it queues cache transactions directed to physical memory addresses that are actively being processed by TMCC 500, and it maintains state required for tracking the active cache transactions. In many cases, TMCC 500 will only have a small and finite number of cache transactions in-flight, and thus the sizes of the data structures used by TTD 512 will generally be modest.

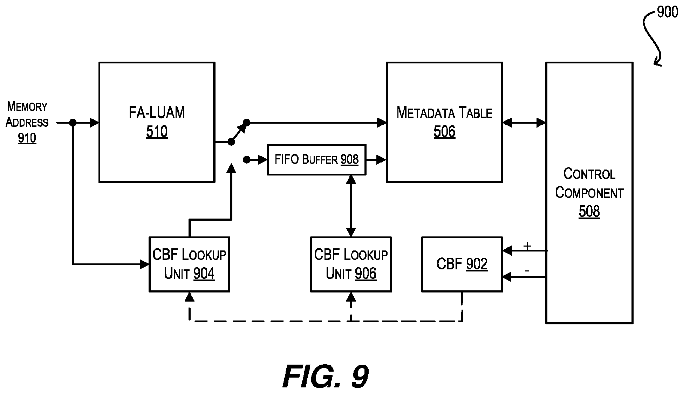

FIG. 9 is a simplified diagram 900 illustrating example hardware logic for TTD 512 and how that logic may be integrated with FA-LUAM 510, metadata table 506, and control component 508 of TMCC 500 according to certain embodiments. This implementation assumes that FA-LUAM 510 employs 2-choice hashing.

As shown, the TTD hardware logic includes a counting Bloom filter (CBF) 902 comprising two CBF lookup units 904 and 906 and a FIFO buffer 908. As known in the art, a Bloom filter is a probabilistic data structure that can be used to determine whether an element is a member of a set. The results of a query to a Bloom filter can be a false positive, but it cannot be a false negative; in other words, a Bloom filter can return an answer of "possibly in the set" or "definitely not in the set." A CBF is a variant of a Bloom filter that can be used to determine whether a count number of an element is smaller than a threshold. Like the Bloom filter, false positives are possible but false negatives are not; thus, a CBF can return an answer of "possibly bigger or equal to the threshold" or "definitely smaller than the threshold."

Each CBF lookup unit 904/906 implements two counter arrays corresponding to the two hash functions employed by FA-LUAM 510. When control component 508 initiates a cache transaction for a physical memory address, it updates two counters for that address (one corresponding to the hash generated by the first hash function of FA-LUAM 510 and another corresponding to the hash generated by the second hash function of FA-LUAM 510) in the respective counter arrays of each CBF lookup unit 904/906.

Further, at the time TMCC 500 receives an incoming physical memory address 910, that address is provided as input to CBF lookup unit 904 in parallel with FA-LUAM 510, and CBF lookup unit 904 checks whether address 910 is found in the CBF, which means that an active cache transaction for the address is in progress. If the answer is yes, a signal is asserted that causes the cache transaction corresponding to address 910 to be stored in FIFO buffer 908 after the FA-LUAM lookup. The other CBF lookup unit 906 is associated with FIFO buffer 908 and will cause FIFO buffer 908 to release the cache transaction once the other active transactions for the same address have been completed.

Certain embodiments described herein can employ various computer-implemented operations involving data stored in computer systems. For example, these operations can require physical manipulation of physical quantities-usually, though not necessarily, these quantities take the form of electrical or magnetic signals, where they (or representations of them) are capable of being stored, transferred, combined, compared, or otherwise manipulated. Such manipulations are often referred to in terms such as producing, identifying, determining, comparing, etc. Any operations described herein that form part of one or more embodiments can be useful machine operations.

Further, one or more embodiments can relate to a device or an apparatus for performing the foregoing operations. The apparatus can be specially constructed for specific required purposes, or it can be a generic computer system comprising one or more general purpose processors (e.g., Intel or AMD x86 processors) selectively activated or configured by program code stored in the computer system. In particular, various generic computer systems may be used with computer programs written in accordance with the teachings herein, or it may be more convenient to construct a more specialized apparatus to perform the required operations. The various embodiments described herein can be practiced with other computer system configurations including handheld devices, microprocessor systems, microprocessor-based or programmable consumer electronics, minicomputers, mainframe computers, and the like.

Yet further, one or more embodiments can be implemented as one or more computer programs or as one or more computer program modules embodied in one or more non-transitory computer readable storage media. The term non-transitory computer readable storage medium refers to any storage device, based on any existing or subsequently developed technology, that can store data and/or computer programs in a non-transitory state for access by a computer system. Examples of non-transitory computer readable media include a hard drive, network attached storage (NAS), read-only memory, random-access memory, flash-based nonvolatile memory (e.g., a flash memory card or a solid state disk), persistent memory, NVMe device, a CD (Compact Disc) (e.g., CD-ROM, CD-R, CD-RW, etc.), a DVD (Digital Versatile Disc), a magnetic tape, and other optical and non-optical data storage devices. The non-transitory computer readable media can also be distributed over a network coupled computer system so that the computer readable code is stored and executed in a distributed fashion.

Finally, boundaries between various components, operations, and data stores are somewhat arbitrary, and particular operations are illustrated in the context of specific illustrative configurations. Other allocations of functionality are envisioned and may fall within the scope of the invention(s). In general, structures and functionality presented as separate components in exemplary configurations can be implemented as a combined structure or component. Similarly, structures and functionality presented as a single component can be implemented as separate components.

As used in the description herein and throughout the claims that follow, "a," "an," and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of particular embodiments may be implemented. These examples and embodiments should not be deemed to be the only embodiments and are presented to illustrate the flexibility and advantages of particular embodiments as defined by the following claims. Other arrangements, embodiments, implementations, and equivalents can be employed without departing from the scope hereof as defined by the claims.

## Claims

1. A method (300) performed by a hardware-based tiered memory cache controller, TMCC, of a tiered memory computer system, the method (300) comprising:
receiving (302) a physical memory address for processing, wherein the tiered memory computer system includes a plurality of memory tiers ordered from highest to lowest, each memory tier corresponding to a type of physical memory available to the tiered memory computer system, wherein higher memory tiers correspond to types of physical memory that are faster but more expensive than lower memory tiers, and wherein the TMCC comprises a cache that is separate from the plurality of memory tiers;
determining (304), from among a plurality of operating modes supported by the TMCC, an operating mode associated with the physical memory address, wherein the determining (304) is based on associations between physical memory address ranges and the plurality of operating modes, and wherein each operating mode performs one or more functions pertaining to management or usage of the plurality of memory tiers; and
processing (306) the physical memory address in accordance with the determined operating mode;
**characterised in that**
the plurality of operating modes includes a difference cache mode that involves caching writes made to a memory object held in a memory tier that is shared by a plurality of consumers and is subject to a copy-on-write, COW, policy,
wherein the writes are made by a first consumer in the plurality of consumers, and
wherein the cached writes are only visible to the first consumer and invisible to other consumers in the plurality of consumers.

2. The method (300) of claim 1, wherein
the plurality of operating modes includes one or more operating modes that facilitate migration of memory objects between the plurality of memory tiers.

3. The method (300) of claim 1 or 2, wherein
the TMCC resides between a dynamic random-access memory, DRAM, memory tier and one or more memory tiers below the DRAM memory tier, and wherein
the plurality of operating modes includes a standard cache mode that involves caching memory objects held in the one or more memory tiers.

4. The method (300) of any one of the claims 1 to 3, wherein
the associations between the physical memory address ranges and the plurality of operating modes are defined by an operating system, OS, or hypervisor of the tiered memory computer system.

5. The method (300) of any one of the claims 1 to 4, wherein
the TMCC is implemented using a field-programmable gate array, wherein
the cache of the TMCC comprises a lookup and address map, LUAM, a metadata table separate from the LUAM, and a cache memory, wherein data held by the LUAM and metadata table is stored in static random-access memory, SRAM, of the FPGA, and wherein
data held by the cache memory is stored in dynamic random-access memory of the FPGA.

6. The method (300) of claim 5, wherein
the TMCC is capable of processing multiple transactions pertaining to a single physical memory address concurrently, and wherein the TMCC implements a component separate from the LUAM, the metadata table, and the cache memory that:
queues the multiple transactions to avoid conflicts; and
maintains state associated with the multiple transactions.

7. A hardware-based tiered memory cache controller, TMCC, (202) of a tiered memory computer system (200), the TMCC (202) being configured to:
receive a physical memory address for processing, wherein the tiered memory computer system (200) includes a plurality (114) of memory tiers (104, 106, 108, 110, 112) ordered from highest to lowest, each memory tier corresponding to a type of physical memory available to the tiered memory computer system (200), wherein higher memory tiers correspond to types of physical memory that are faster but more expensive than lower memory tiers, and wherein the TMCC (202) comprises a cache (204) that is separate from the plurality (114) of memory tiers (104, 106, 108, 110, 112);
determine, from among a plurality of operating modes supported by the TMCC (202), an operating mode associated with the physical memory address, wherein the determining is based on associations between physical memory address ranges and the plurality of operating modes, and wherein each operating mode performs one or more functions pertaining to management or usage of the plurality of memory tiers; and
process the physical memory address in accordance with the determined operating mode;
**characterised in that** the plurality of operating modes includes a difference cache mode that involves caching writes made to a memory object held in a memory tier that is shared by a plurality of consumers and is subject to a copy-on-write, COW, policy,
wherein the writes are made by a first consumer in the plurality of consumers, and
wherein the cached writes are only visible to the first consumer and invisible to other consumers in the plurality of consumers.

8. The TMCC (202) of claim 7, wherein
the plurality of operating modes includes one or more operating modes that facilitate migration of memory objects between the plurality of memory tiers.

9. The TMCC (202) of claim 7 or 8, wherein
the TMCC (202) resides between a dynamic random-access memory, DRAM, memory tier (106) and one or more memory tiers (108, 110, 112) below the DRAM memory tier (106), and wherein
the plurality of operating modes includes a standard cache mode that involves caching memory objects held in the one or more memory tiers.

10. The TMCC (202) of any one of the claims 7 to 9, wherein
the associations between the physical memory address ranges and the plurality of operating modes are defined by an operating system, OS, or hypervisor of the tiered memory computer system (200).

11. The TMCC (202) of any one of the claims 7 to 10, wherein
the TMCC (202) is implemented using a field-programmable gate array, wherein
the cache (204) of the TMCC (202) comprises a lookup and address map, LUAM, (402) a metadata table (406) separate from the LUAM (402), and a cache memory (400), wherein
data held by the LUAM (402) and metadata table (406) is stored in static random-access memory, SRAM, of the FPGA, and wherein
data held by the cache memory (400) is stored in dynamic random-access memory of the FPGA;
wherein in particular
the TMCC (202) is capable of processing multiple transactions pertaining to a single physical memory address concurrently, and wherein
the TMCC (202) implements a component (408) separate from the LUAM (402), the metadata table (406), and the cache memory (400) that:
queues the multiple transactions to avoid conflicts; and
maintains state associated with the multiple transactions.

12. A tiered memory computer system (200) comprising:
a plurality (114) of memory tiers (104, 106, 108, 110, 112) ordered from highest to lowest, wherein higher memory tiers correspond to types of physical memory that are faster but more expensive than lower memory tiers; and
a tiered memory cache controller, TMCC (202), comprising a cache (204) that is separate from the plurality (114) of memory tiers (104, 106, 108, 110, 112), the TMCC (202) being configured to:
receive a physical memory address (410) for processing;
determine, from among a plurality of operating modes supported by the TMCC (202), an operating mode associated with the physical memory address, wherein the determining is based on associations between physical memory address ranges and the plurality of operating modes, and wherein each operating mode performs one or more functions pertaining to management or usage of the plurality of memory tiers; and
process the physical memory address (410) in accordance with the determined operating mode;
**characterised in that** the plurality of operating modes includes a difference cache mode that involves caching writes made to a memory object held in a memory tier that is shared by a plurality of consumers and is subject to a copy-on-write, COW, policy,
wherein the writes are made by a first consumer in the plurality of consumers, and
wherein the cached writes are only visible to the first consumer and invisible to other consumers in the plurality of consumers.

13. The tiered memory computer system (200) of claim 12, wherein the tiered memory computer system (200) comprises at least one of the following features:
(A) the plurality of operating modes includes one or more operating modes that facilitate migration of memory objects between the plurality of memory tiers;
(B) the TMCC (202) resides between a dynamic random-access memory, DRAM, memory tier (106) and one or more memory tiers (108, 110, 112) below the DRAM memory tier (106), and wherein the plurality of operating modes includes a standard cache mode that involves caching memory objects held in the one or more memory tiers;
and
(C) the associations between the physical memory address ranges and the plurality of operating modes are defined by an operating system, OS, or hypervisor of the tiered memory computer system (200).

14. The tiered memory computer system (200) of claim 12 or 13, wherein
the TMCC (202) is implemented using a field-programmable gate array, wherein
the cache (204) of the TMCC (202) comprises a lookup and address map, LUAM, (402) a metadata table (406) separate from the LUAM (402), and a cache memory (400), wherein
data held by the LUAM (402) and metadata table (406) is stored in static random-access memory, SRAM, of the FPGA, and wherein
data held by the cache memory (400) is stored in dynamic random-access memory of the FPGA;
wherein in particular
the TMCC (202) is capable of processing multiple transactions pertaining to a single physical memory address concurrently, and wherein
the TMCC (202) implements a component (408) separate from the LUAM (402), the metadata table (406), and the cache memory (400) that:
queues the multiple transactions to avoid conflicts; and
maintains state associated with the multiple transactions.

## Patentansprüche

1. Ein Verfahren (300), das von einem hardwarebasierten Stufenspeicher-Cache-Controller, TMCC, eines Stufenspeicher-Computersystems durchgeführt wird, wobei das Verfahren (300) aufweist:
Empfangen (302) einer physikalischen Speicheradresse zur Verarbeitung, wobei das Stufenspeicher-Computersystem eine Mehrzahl von Speicherstufen aufweist, die von der höchsten zur niedrigsten geordnet sind, wobei jede Speicherstufe einem Typ von physikalischem Speicher entspricht, der für das Stufenspeicher-Computersystem verfügbar ist, wobei höhere Speicherstufen Typen von physikalischem Speicher entsprechen, die schneller, aber teurer sind als niedrigere Speicherstufen, und wobei der TMCC einen Cache aufweist, der von der Mehrzahl von Speicherstufen getrennt ist;
Bestimmen (304), aus einer Mehrzahl von Betriebsmodi, die von dem TMCC unterstützt werden, eines Betriebsmodus, der mit der physikalischen Speicheradresse assoziiert ist, wobei das Bestimmen (304) auf Assoziationen zwischen physikalischen Speicheradressbereichen und der Mehrzahl von Betriebsmodi basiert, und wobei jeder Betriebsmodus eine oder mehrere Funktionen durchführt, die sich auf die Verwaltung oder Nutzung der Mehrzahl von Speicherstufen beziehen; und
Verarbeiten (306) der physikalischen Speicheradresse gemäß dem bestimmten Betriebsmodus;
**dadurch gekennzeichnet, dass**
die Mehrzahl von Betriebsmodi einen Differenz-Cache-Modus aufweist, der das Caching von Schreibvorgängen beinhaltet, die an einem Speicherobjekt vorgenommen werden, das in einer Speicherstufe gehalten wird, die von einer Mehrzahl von Verbrauchern gemeinsam genutzt wird und einer Copy-on-Write-, COW-, Richtlinie unterliegt,
wobei die Schreibvorgänge von einem ersten Verbraucher in der Mehrzahl von Verbrauchern vorgenommen werden, und
wobei die gecachten Schreibvorgänge nur für den ersten Verbraucher sichtbar und für andere Verbraucher in der Mehrzahl von Verbrauchern unsichtbar sind.

2. Das Verfahren (300) nach Anspruch 1, wobei
die Mehrzahl von Betriebsmodi einen oder mehrere Betriebsmodi aufweist, die die Migration von Speicherobjekten zwischen der Mehrzahl von Speicherstufen erleichtern.

3. Das Verfahren (300) nach Anspruch 1 oder 2, wobei
der TMCC zwischen einer dynamischen Direktzugriffsspeicher-, DRAM-, Speicherstufe und einer oder mehreren Speicherstufen unterhalb der DRAM-Speicherstufe liegt, und wobei
die Mehrzahl von Betriebsmodi einen Standard-Cache-Modus aufweist, der das Caching von Speicherobjekten beinhaltet, die in der einen oder den mehreren Speicherstufen gehalten werden.

4. Das Verfahren (300) nach einem der Ansprüche 1 bis 3, wobei
die Assoziationen zwischen den physikalischen Speicheradressbereichen und der Mehrzahl von Betriebsmodi durch ein Betriebssystem, OS, oder einen Hypervisor des Stufenspeicher-Computersystems definiert werden.

5. Das Verfahren (300) nach einem der Ansprüche 1 bis 4, wobei
der TMCC unter Verwendung eines feldprogrammierbaren Gate-Arrays implementiert wird, wobei
der Cache des TMCC eine Nachschlag- und Adressabbildung, LUAM, eine von der LUAM getrennte Metadatentabelle und einen Cache-Speicher aufweist, wobei Daten, die von der LUAM und der Metadatentabelle gehalten werden, in einem statischen Direktzugriffsspeicher, SRAM, des FPGAs gespeichert werden, und wobei
Daten, die von dem Cache-Speicher gehalten werden, in einem dynamischen Direktzugriffsspeicher des FPGAs gespeichert werden.

6. Das Verfahren (300) nach Anspruch 5, wobei
der TMCC in der Lage ist, mehrere Transaktionen, die zu einer einzelnen physikalischen Speicheradresse gehören, gleichzeitig zu verarbeiten, und wobei der TMCC eine von der LUAM, der Metadatentabelle und dem Cache-Speicher getrennte Komponente implementiert, die:
die mehreren Transaktionen in eine Warteschlange stellt, um Konflikte zu vermeiden; und
einen Zustand aufrechterhält, der mit den mehreren Transaktionen assoziiert ist.

7. Ein hardwarebasierter Stufenspeicher-Cache-Controller, TMCC, (202) eines Stufenspeicher-Computersystems (200), wobei der TMCC (202) konfiguriert ist zum:
Empfangen einer physikalischen Speicheradresse zur Verarbeitung, wobei das Stufenspeicher-Computersystem (200) eine Mehrzahl (114) von Speicherstufen (104, 106, 108, 110, 112) aufweist, die von der höchsten zur niedrigsten geordnet sind, wobei jede Speicherstufe einem Typ von physikalischem Speicher entspricht, der für das Stufenspeicher-Computersystem (200) verfügbar ist, wobei höhere Speicherstufen Typen von physikalischem Speicher entsprechen, die schneller, aber teurer sind als niedrigere Speicherstufen, und wobei der TMCC (202) einen Cache (204) aufweist, der von der Mehrzahl (114) von Speicherstufen (104, 106, 108, 110, 112) getrennt ist;
Bestimmen, aus einer Mehrzahl von Betriebsmodi, die von dem TMCC (202) unterstützt werden, eines Betriebsmodus, der mit der physikalischen Speicheradresse assoziiert ist, wobei das Bestimmen auf Assoziationen zwischen physikalischen Speicheradressbereichen und der Mehrzahl von Betriebsmodi basiert, und wobei jeder Betriebsmodus eine oder mehrere Funktionen durchführt, die sich auf die Verwaltung oder Nutzung der Mehrzahl von Speicherstufen beziehen; und
Verarbeiten der physikalischen Speicheradresse gemäß dem bestimmten Betriebsmodus;
**dadurch gekennzeichnet, dass**
die Mehrzahl von Betriebsmodi einen Differenz-Cache-Modus aufweist, der das Caching von Schreibvorgängen beinhaltet, die an einem Speicherobjekt vorgenommen werden, das in einer Speicherstufe gehalten wird, die von einer Mehrzahl von Verbrauchern gemeinsam genutzt wird und einer Copy-on-Write-, COW-, Richtlinie unterliegt,
wobei die Schreibvorgänge von einem ersten Verbraucher in der Mehrzahl von Verbrauchern vorgenommen werden, und
wobei die gecachten Schreibvorgänge nur für den ersten Verbraucher sichtbar und für andere Verbraucher in der Mehrzahl von Verbrauchern unsichtbar sind.

8. Der TMCC (202) nach Anspruch 7, wobei
die Mehrzahl von Betriebsmodi einen oder mehrere Betriebsmodi aufweist, die die Migration von Speicherobjekten zwischen der Mehrzahl von Speicherstufen erleichtern.

9. Der TMCC (202) nach Anspruch 7 oder 8, wobei
der TMCC (202) zwischen einer dynamischen Direktzugriffsspeicher-, DRAM-, Speicherstufe (106) und einer oder mehreren Speicherstufen (108, 110, 112) unterhalb der DRAM-Speicherstufe (106) liegt, und wobei
die Mehrzahl von Betriebsmodi einen Standard-Cache-Modus aufweist, der das Caching von Speicherobjekten beinhaltet, die in der einen oder den mehreren Speicherstufen gehalten werden.

10. Der TMCC (202) nach einem der Ansprüche 7 bis 9, wobei
die Assoziationen zwischen den physikalischen Speicheradressbereichen und der Mehrzahl von Betriebsmodi durch ein Betriebssystem, OS, oder einen Hypervisor des Stufenspeicher-Computersystems (200) definiert werden.

11. Der TMCC (202) nach einem der Ansprüche 7 bis 10, wobei
der TMCC (202) unter Verwendung eines feldprogrammierbaren Gate-Arrays implementiert wird, wobei
der Cache (204) des TMCC (202) eine Nachschlag- und Adressabbildung, LUAM, (402) eine von der LUAM (402) getrennte Metadatentabelle (406) und einen Cache-Speicher (400) aufweist, wobei
Daten, die von der LUAM (402) und der Metadatentabelle (406) gehalten werden, in einem statischen Direktzugriffsspeicher, SRAM, des FPGAs gespeichert werden, und wobei
Daten, die von dem Cache-Speicher (400) gehalten werden, in einem dynamischen Direktzugriffsspeicher des FPGAs gespeichert werden;
wobei insbesondere
der TMCC (202) in der Lage ist, mehrere Transaktionen, die zu einer einzelnen physikalischen Speicheradresse gehören, gleichzeitig zu verarbeiten, und wobei
der TMCC (202) eine von der LUAM (402), der Metadatentabelle (406) und dem Cache-Speicher (400) getrennte Komponente (408) implementiert, die:
die mehreren Transaktionen in eine Warteschlange stellt, um Konflikte zu vermeiden; und
einen Zustand aufrechterhält, der mit den mehreren Transaktionen assoziiert ist.

12. Ein Stufenspeicher-Computersystem (200), aufweisend:
eine Mehrzahl (114) von Speicherstufen (104, 106, 108, 110, 112), die von der höchsten zur niedrigsten geordnet sind, wobei höhere Speicherstufen Typen von physikalischem Speicher entsprechen, die schneller, aber teurer sind als niedrigere Speicherstufen; und
einen Stufenspeicher-Cache-Controller, TMCC, (202), aufweisend einen Cache (204), der von der Mehrzahl (114) von Speicherstufen (104, 106, 108, 110, 112) getrennt ist, wobei der TMCC (202) konfiguriert ist zum:
Empfangen einer physikalischen Speicheradresse (410) zur Verarbeitung;
Bestimmen, aus einer Mehrzahl von Betriebsmodi, die von dem TMCC (202) unterstützt werden, eines Betriebsmodus, der mit der physikalischen Speicheradresse assoziiert ist, wobei das Bestimmen auf Assoziationen zwischen physikalischen Speicheradressbereichen und der Mehrzahl von Betriebsmodi basiert, und wobei jeder Betriebsmodus eine oder mehrere Funktionen durchführt, die sich auf die Verwaltung oder Nutzung der Mehrzahl von Speicherstufen beziehen; und
Verarbeiten der physikalischen Speicheradresse (410) gemäß dem bestimmten Betriebsmodus;
**dadurch gekennzeichnet, dass**
die Mehrzahl von Betriebsmodi einen Differenz-Cache-Modus aufweist, der das Caching von Schreibvorgängen beinhaltet, die an einem Speicherobjekt vorgenommen werden, das in einer Speicherstufe gehalten wird, die von einer Mehrzahl von Verbrauchern gemeinsam genutzt wird und einer Copy-on-Write-, COW-, Richtlinie unterliegt,
wobei die Schreibvorgänge von einem ersten Verbraucher in der Mehrzahl von Verbrauchern vorgenommen werden, und
wobei die gecachten Schreibvorgänge nur für den ersten Verbraucher sichtbar und für andere Verbraucher in der Mehrzahl von Verbrauchern unsichtbar sind.

13. Das Stufenspeicher-Computersystem (200) gemäß Anspruch 12, wobei das Stufenspeicher-Computersystem (200) zumindest eines der folgenden Merkmale aufweist:
(A) die Mehrzahl von Betriebsmodi weist einen oder mehrere Betriebsmodi auf, die die Migration von Speicherobjekten zwischen der Mehrzahl von Speicherstufen erleichtern;
(B) der TMCC (202) liegt zwischen einer dynamischen Direktzugriffsspeicher-, DRAM-, Speicherstufe (106) und einer oder mehreren Speicherstufen (108, 110, 112) unterhalb der DRAM-Speicherstufe (106), und wobei die Mehrzahl von Betriebsmodi einen Standard-Cache-Modus aufweist, der das Caching von Speicherobjekten beinhaltet, die in der einen oder den mehreren Speicherstufen gehalten werden;
und
(C) die Assoziationen zwischen den physikalischen Speicheradressbereichen und der Mehrzahl von Betriebsmodi werden durch ein Betriebssystem, OS, oder einen Hypervisor des Stufenspeicher-Computersystems (200) definiert.

14. Das Stufenspeicher-Computersystem (200) gemäß Anspruch 12 oder 13, wobei
der TMCC (202) unter Verwendung eines feldprogrammierbaren Gate-Arrays implementiert wird, wobei
der Cache (204) des TMCC (202) eine Nachschlag- und Adressabbildung, LUAM, (402) eine von der LUAM (402) getrennte Metadatentabelle (406) und einen Cache-Speicher (400) aufweist, wobei
Daten, die von der LUAM (402) und der Metadatentabelle (406) gehalten werden, in einem statischen Direktzugriffsspeicher, SRAM, des FPGAs gespeichert werden, und wobei
Daten, die von dem Cache-Speicher (400) gehalten werden, in einem dynamischen Direktzugriffsspeicher des FPGAs gespeichert werden;
wobei insbesondere
der TMCC (202) in der Lage ist, mehrere Transaktionen, die zu einer einzelnen physikalischen Speicheradresse gehören, gleichzeitig zu verarbeiten, und wobei
der TMCC (202) eine von der LUAM (402), der Metadatentabelle (406) und dem Cache-Speicher (400) getrennte Komponente (408) implementiert, die:
die mehreren Transaktionen in eine Warteschlange stellt, um Konflikte zu vermeiden; und
einen Zustand aufrechterhält, der mit den mehreren Transaktionen assoziiert ist.

## Revendications

1. Procédé (300) exécuté par un dispositif de commande d'antémémoire étagée à base de matériel, TMCC, d'un système informatique à mémoire étagée, le procédé (300) comprenant les étapes consistant à :
recevoir (302) une adresse de mémoire physique pour le traitement, dans lequel le système informatique à mémoire étagée inclut une pluralité d'étages de mémoire ordonnés du plus haut au plus bas, chaque étage de mémoire correspondant à un type de mémoire physique disponible pour le système informatique de mémoire à étages, dans lequel des étages de mémoire supérieurs correspondent à des types de mémoire physique qui sont plus rapides mais plus coûteux que des étages de mémoire inférieurs, et dans lequel le TMCC comprend un cache qui est séparé de la pluralité d'étages de mémoire ;
déterminer (304), parmi une pluralité de modes de fonctionnement pris en charge par le TMCC, un mode de fonctionnement associé à l'adresse de mémoire physique, dans lequel la détermination (304) est basée sur des associations entre des plages d'adresse de mémoire physique et la pluralité de modes de fonctionnement, et dans lequel chaque mode de fonctionnement exécute une ou plusieurs fonctions relatives à la gestion ou à l'utilisation de la pluralité d'étages de mémoire ; et
traiter (306) l'adresse de mémoire physique conformément au mode de fonctionnement déterminé ;
**caractérisé en ce que**
la pluralité de modes de fonctionnement comprend un mode de cache de différence qui implique une mise en cache d'écritures effectuées sur un objet de mémoire détenu dans un étage de mémoire qui est partagé par une pluralité de consommateurs et est soumis à une politique de copie sur écriture, COW,
dans lequel les écritures sont réalisées par un premier consommateur de la pluralité de consommateurs, et
dans lequel les écritures mises en cache ne sont visibles que pour le premier consommateur et invisibles pour d'autres consommateurs de la pluralité de consommateurs.

2. Procédé (300) selon la revendication 1, dans lequel
la pluralité de modes de fonctionnement inclut un ou plusieurs modes de fonctionnement qui facilitent une migration d'objets de mémoire entre la pluralité d'étages de mémoire.

3. Procédé (300) selon la revendication 1 ou 2, dans lequel
le TMCC réside entre un étage de mémoire de mémoire vive dynamique, DRAM, et un ou plusieurs étages de mémoire en dessous de l'étage de mémoire DRAM, et dans lequel
la pluralité de modes de fonctionnement inclut un mode de cache standard qui implique la mise en cache d'objets de mémoire contenus dans les un ou plusieurs étages de mémoire.

4. Procédé (300) selon l'une quelconque des revendications 1 à 3, dans lequel
les associations entre les plages d'adresse de mémoire physique et la pluralité de modes de fonctionnement sont définies par un système d'exploitation, OS, ou un hyperviseur du système informatique à mémoire étagée.

5. Procédé (300) selon l'une quelconque des revendications 1 à 4, dans lequel
le TMCC est mis en œuvre en utilisant un réseau de portes programmables sur site, dans lequel
le cache du TMCC comprend une carte de recherche et d'adresse, LUAM, une table de métadonnées distincte du LUAM, et une mémoire cache, dans lequel les données détenues par le LUAM et la table de métadonnées sont stockées dans une mémoire vive statique, SRAM, du FPGA, et dans lequel
les données détenues par la mémoire cache sont stockées dans une mémoire vive dynamique du FPGA.

6. Procédé (300) selon la revendication 5, dans lequel
le TMCC est capable de traiter simultanément plusieurs transactions relatives à une seule adresse de mémoire physique, et dans lequel le TMCC met en œuvre un composant distinct du LUAM, de la table de métadonnées et de la mémoire cache qui :
met en file d'attente les multiples transactions pour éviter des conflits ; et
maintient un état associé aux multiples transactions.

7. Dispositif de commande d'antémémoire étagée à base de matériel, TMCC, (202) d'un système informatique à mémoire étagée (200), le TMCC (202) étant configuré pour :
recevoir une adresse de mémoire physique pour traitement, dans lequel le système informatique à mémoire étagée (200) inclut une pluralité (114) d'étages de mémoire (104, 106, 108, 110, 112) ordonnés du plus haut au plus bas, chaque niveau de mémoire correspondant à un type de mémoire physique disponible pour le système informatique à mémoire étagée (200), dans lequel les étages de mémoire supérieurs correspondent à des types de mémoire physique qui sont plus rapides mais plus coûteux que les étages de mémoire inférieurs, et dans lequel le TMCC (202) comprend un cache (204) qui est séparé de la pluralité (114) d'étages de mémoire (104, 106, 108, 110, 112) ;
déterminer, parmi une pluralité de modes de fonctionnement pris en charge par le TMCC (202), un mode de fonctionnement associé à l'adresse de mémoire physique, dans lequel la détermination est basée sur des associations entre des plages d'adresse de mémoire physique et la pluralité de modes de fonctionnement, et dans lequel chaque mode de fonctionnement exécute une ou plusieurs fonctions relatives à la gestion ou à l'utilisation de la pluralité d'étages de mémoire ; et
traiter l'adresse de mémoire physique conformément au mode de fonctionnement déterminé ;
**caractérisé en ce que**
la pluralité de modes de fonctionnement comprend un mode de cache de différence qui implique une mise en cache d'écritures effectuées sur un objet de mémoire détenu dans un étage de mémoire qui est partagé par une pluralité de consommateurs et est soumis à une politique de copie sur écriture, COW,
dans lequel les écritures sont réalisées par un premier consommateur de la pluralité de consommateurs, et
dans lequel les écritures mises en cache ne sont visibles que pour le premier consommateur et invisibles pour d'autres consommateurs de la pluralité de consommateurs.

8. TMCC (202) selon la revendication 7, dans lequel la pluralité de modes de fonctionnement inclut un ou plusieurs modes de fonctionnement qui facilitent une migration d'objets de mémoire entre la pluralité d'étages de mémoire.

9. TMCC (202) selon la revendication 7 ou 8, dans lequel
le TMCC (202) réside entre un étage de mémoire (106) de mémoire vive dynamique, DRAM, et un ou plusieurs étages de mémoire (108, 110, 112) en dessous de l'étage de mémoire DRAM (106), et dans lequel
la pluralité de modes de fonctionnement inclut un mode de cache standard qui implique la mise en cache d'objets de mémoire contenus dans les un ou plusieurs étages de mémoire.

10. TMCC (202) selon l'une quelconque des revendications 7 à 9, dans lequel
les associations entre les plages d'adresse de mémoire physique et la pluralité de modes de fonctionnement sont définies par un système d'exploitation, OS, ou un hyperviseur du système informatique à mémoire étagée (200) .

11. TMCC (202) selon l'une quelconque des revendications 7 à 10, dans lequel
le TMCC (202) est mis en œuvre en utilisant un réseau de portes programmables sur site, dans lequel
le cache (204) du TMCC (202) comprend une carte de recherche et d'adresse, Luam, (402) une table de métadonnées (406) séparée du Luam (402), et une mémoire cache (400), dans lequel
les données détenues par le LUAM (402) et la table de métadonnées (406) sont stockées dans une mémoire vive statique, SRAM, du FPGA, et dans lequel
les données détenues par la mémoire cache (400) sont stockées dans une mémoire vive dynamique du FPGA.
dans lequel en particulier
le TMCC (202) est capable de traiter simultanément plusieurs transactions relatives à une seule adresse de mémoire physique, et dans lequel
le TMCC (202) implémente un composant (408) distinct du LUAM (402), de la table de métadonnées (406) et de la mémoire cache (400) qui :
met en file d'attente les multiples transactions pour éviter des conflits ; et
maintient un état associé aux multiples transactions.

12. Système informatique à mémoire étagée (200), comprenant :
une pluralité (114) d'étages de mémoire (104, 106, 108, 110, 112) ordonnés du plus haut au plus bas, dans lequel des étages de mémoire supérieurs correspondent à des types de mémoire physique qui sont plus rapides mais plus coûteux que des étages de mémoire inférieurs ; et
un dispositif de commande d'antémémoire étagée, TMCC, (202), comprenant un cache (204) qui est séparé de la pluralité (114) d'étages de mémoire (104, 106, 108, 110, 112), le TMCC (202) étant configuré pour :
recevoir une adresse de mémoire physique (410) pour traitement ;
déterminer, parmi une pluralité de modes de fonctionnement pris en charge par le TMCC (202), un mode de fonctionnement associé à l'adresse de mémoire physique, dans lequel la détermination est basée sur des associations entre des plages d'adresse de mémoire physique et la pluralité de modes de fonctionnement, et dans lequel chaque mode de fonctionnement exécute une ou plusieurs fonctions relatives à la gestion ou à l'utilisation de la pluralité d'étages de mémoire ; et
traiter l'adresse de mémoire physique (410) conformément au mode de fonctionnement déterminé ;
**caractérisé en ce que**
la pluralité de modes de fonctionnement comprend un mode de cache de différence qui implique une mise en cache d'écritures effectuées sur un objet de mémoire détenu dans un étage de mémoire qui est partagé par une pluralité de consommateurs et est soumis à une politique de copie sur écriture, COW,
dans lequel les écritures sont réalisées par un premier consommateur de la pluralité de consommateurs, et
dans lequel les écritures mises en cache ne sont visibles que pour le premier consommateur et invisibles pour d'autres consommateurs de la pluralité de consommateurs.

13. Système informatique à mémoire étagée (200) selon la revendication 12, dans lequel le système informatique à mémoire étagée (200) comprend au moins l'une des caractéristiques suivantes :
(A) la pluralité de modes de fonctionnement comprend un ou plusieurs modes de fonctionnement qui facilitent une migration d'objets de mémoire entre la pluralité d'étages de mémoire ;
(B) le TMCC (202) réside entre un étage de mémoire vive dynamique, DRAM, (106) et un ou plusieurs étages de mémoire (108, 110, 112) en dessous de l'étage de mémoire DRAM (106), et dans lequel la pluralité de modes de fonctionnement comprend un mode de cache standard qui implique une mise en cache d'objets de mémoire détenus dans les un ou plusieurs étages de mémoire ; et
(C) les associations entre les plages d'adresse de mémoire physique et la pluralité de modes de fonctionnement sont définies par un système d'exploitation, OS, ou un hyperviseur du système informatique à mémoire étagée (200) .

14. Système informatique à mémoire étagée (200) selon la revendication 12 ou 13, dans lequel
le TMCC (202) est mis en œuvre en utilisant un réseau de portes programmables sur site, dans lequel
le cache (204) du TMCC (202) comprend une carte de recherche et d'adresse, Luam, (402) une table de métadonnées (406) séparée du Luam (402), et une mémoire cache (400), dans lequel
les données détenues par le LUAM (402) et la table de métadonnées (406) sont stockées dans une mémoire vive statique, SRAM, du FPGA, et dans lequel
les données détenues par la mémoire cache (400) sont stockées dans une mémoire vive dynamique du FPGA.
dans lequel en particulier
le TMCC (202) est capable de traiter simultanément plusieurs transactions relatives à une seule adresse de mémoire physique, et dans lequel
le TMCC (202) implémente un composant (408) distinct du LUAM (402), de la table de métadonnées (406) et de la mémoire cache (400) qui :
met en file d'attente les multiples transactions pour éviter des conflits ; et
maintient un état associé aux multiples transactions.
